# EUROPEAN PATENT SPECIFICATION

(11) **EP 1 017 633 B1**
(45) Date of publication and mention of the grant of the patent: **25.05.2005**
(21) Application number: 98932336.5
(22) Date of filing: 01.07.1998
(51) Int. Cl.: C02F 1/46, C02F 1/32, C02F 1/72

(54) **METHOD AND APPARATUS FOR DECONTAMINATION OF FLUIDS**
VERFAHREN UND VORRICHTUNG ZUR DEKONTAMINATION VON FLUIDEN
PROCEDE ET APPAREIL DE DECONTAMINATION DE FLUIDES

(30) Priority: 01.07.1997 GB 9713856
(43) Date of publication of application: 12.07.2000
(73) Proprietor: Axonics Limited, Swansea, West Glamorgan SA6 8QR (GB)
(72) Inventor: MORGAN, Philip Graeme, Swansea SA1 4YE (GB)
(74) Representative: Humphreys, Ceris Anne
(86) International application number: PCT/GB1998/001935
(87) International publication number: WO 1999/001382

(56) References cited:
- DE-A- 4 400 308
- DE-A- 4 414 264
- DE-C- 4 443 297
- US-A- 2 887 444
- US-A- 4 472 255
- US-A- 5 022 974
- US-A- 5 314 589
- US-A- 5 611 907
- PATENT ABSTRACTS OF JAPAN vol. 005, no. 045 (C-048), 25 March 1981 & JP 56 000288 A (TDK CORP), 6 January 1981
- PATENT ABSTRACTS OF JAPAN vol. 097, no. 006, 30 June 1997 & JP 09 038657 A (TAKUMA CO LTD), 10 February 1997

## Description

The invention relates to the decontamination of fluids. More particularly, the invention relates to the decontamination of fluids using electrolysis.

The term "decontamination" as used herein includes processes in which the harmful properties of substances in a treatment fluid are reduced or eliminated and is not intended to be limited in meaning to the complete removal of both the undesired substance and of any harmless or less harmful derivative(s). US-A-5 314 589 discloses an ion generator and a method of generating ions for use in a pool filtration system.

Decontamination of fluids is frequently required in order to destroy, disinfect or remove impurities. The fluid to be decontaminated may especially be contaminated water, for example, waste-water, industrial effluents, process waters, groundwaters, leachates, rivers, streams, recreational waters, marine or coastal waters. The fluids may contain one or more contaminants, for example, inorganics, organics, suspended and colloidal material, metals, organo-metallic compounds and other inorganic, organic and radioactive derivatives. To date, decontamination has been widely achieved by essentially chemical or biological treatment methods. The use of chemicals in itself poses some problems, in that there is a need to provide for storage of the chemicals, which may be toxic, and that the presence of the reaction products in the removed waste material may make its disposal difficult. Biological treatment requires the growth of sufficient biomass and appropriate species before treatment can proceed, and careful management of the biomass to ensure satisfactory performance. At the same time, the increase in the stringency of the requirements as to the purity of water streams, in particular, effluent streams, has increased the areas of industrial operation for which decontamination of waste or other fluid streams is needed.

The use of electrolysis for the treatment of liquids, for example, in the treatment, disinfection and conditioning of water, waste-water, effluent and other liquid streams is well-known. Such techniques were first employed by early civilisations over 2000 years BC, who used silver storage containers and sunlight to disinfect drinking water. More recently (1888), London County Council used electrolysis of sewage mixed with salt water to disinfect sewage prior to discharging effluent into the river Thames. Electrolysis has also been applied in metal recovery, suspended solids removal, and in the reduction of organic and chemical pollution.

Electroflocculation, which combines the processes of electrocoagulation and electroflotation has previously been used for purification of liquids. In that technique, a flocculant is introduced into the liquid at a controlled concentration, that being achieved in practice by means of electrolytic dissolution of a sacrificial anode at controlled voltage, and the dissolved ions eventually form flocs, onto which particulate materials are preferentially absorbed. For example, where an aluminium anode is used in the treatment of an aqueous solution, aluminium ions are released into the solution and combine with hydroxyl ions (generated by electrolysis of water at the cathode) to form the polymeric coagulant aluminium hydroxide, which absorbs, for example, colloidal material present in the solution, to form an insoluble floc. Typically, hydrogen gas bubbles that have been generated at the cathode combine with the flocs and carry them to the surface of the liquid.

Typically, the previously known electroflocculation techniques have employed an AC or a pulsed DC current, such arrangements giving, as compared with a continuous DC current, reduced floc build up, deposition and hydrogen gas build-up at each electrode and, consequently, reduced passivation, electrical bridging and fouling between the electrodes.

The reactions that occur during electrolysis may conveniently be regarded as consisting of two main types. Reactions that occur at the electrode surface, for example, electrode deposition and dissolution, may be regarded as "direct electrolysis". Direct electrolysis reactions include oxidation and reduction at the electrode surface, for example, oxidative destruction of anionic compounds at the anode. Thus PCBs (polychlorinated biphenyls) may be oxidised by electrolytic treatment at 10V, 15A for 1 second. Reactions that occur in the body of the electrolysis medium, for example the generation from the liquid itself of activated redox reagents such as hydroxyl ions (OH⁻) and hydrogen ions (H⁺) may be regarded as "indirect electrolysis". The hydroxyl and hydrogen ions so produced may decontaminate pollutants in water by means of charge neutralisation or weaker interactions with the pollutants, for example, of Van der Waals forces.

Electrolysis may further involve reactions that involve a pH change within the electrolytic medium. It will be appreciated that pH changes may assist in decontamination. For example, certain metals may be precipitated more easily as their hydroxides if the alkalinity of an acidic aqueous solution is increased.

The known processes for decontamination of liquids that make use of electrolysis have to date been carried out in vessels in which both the electrode area and the cell volume are large. Such vessels include tank systems having metallic gauze electrodes (flotation tanks), cells having a carbon granular/fibre medium and 3-dimensional fabric electrodes (fluidised beds) and parallel plate cells. Typically, they consist of electrodes through which the waste stream is introduced to the reaction vessel, with the ions being "plated out" onto the electrode, as in electrodeposition; floated to the surface as in electroflotation; or released to a further processing step. In most cases electrolysis is aided by the addition of coagulant or flocculating chemicals, the electrolysis process acting as a catalyst to the chemical process.

The present invention provides a fluid treatment system including a fluid-treatment unit comprising first and second electrodes spaced from one another and defining between them a treatment zone, the unit having inlet means for introduction of fluid into the said treatment zone and outlet means for exit of fluid from the said treatment zone, the treatment zone providing a flow path along which the fluid entering through the inlet means in use flows towards the outlet means, the flow path extending generally along at least a part of a surface of at least one of the electrodes, monitoring means for monitoring one or more characteristics of the fluid upstream and/or downstream of the treatment unit, the system further comprising a power source for applying a voltage to the electrodes, means for adjusting the voltage applied to the electrodes, and a control means, the control means being arranged to control the applied voltage in dependence on one or more monitored characteristics of the fluid, as disclosed in the wording of claim 1.

Further embodiments of the invention are disclosed in the dependent claims.

The unit of the invention enables decontamination of fluids, especially of contaminated water streams, to be carried out in a simple manner. In particular, because the decontamination relies on electrolysis, the addition of coagulated or flocculating chemicals may be avoided. It is believed that the unit of the invention enables electrolysis to be applied satisfactorily to a continuous decontamination procedure because the arrangement is such that the liquid stream is caused to flow along the surfaces of the electrodes at which direct electrolysis reactions are occurring and which, in the absence of the fluid flow, would suffer from build-up of reaction products such as floc, electrolytically deposited material or gas bubbles. The build up within an electrolytic cell of floc, or of deposited material and/or of gas bubbles at one or each electrode can lead to reduced amperage across the electrodes, with a consequent need to increase the power requirement to maintain constant treatment conditions within the cell. In the unit of the invention, however, such reaction products may be swept away by the flowing fluid, which may pass through the unit at a flow rate of up to 5000 litre/hour in a unit having an electrolytic cell arrangement of dimensions 300 x 500 mm defining a 2 mm wide treatment zone.

The treatment zone may comprise means for increasing the turbulence within fluid flowing through the zone. The provision of means for increasing the turbulence may increase the efficiency with which, in use of the unit, any build up of material on the electrodes is removed by the fluid. The means for increasing the turbulence may comprise at least one fibre extending transversely relative to the direction of flow. Advantageously, the means for increasing the turbulence comprises a mesh.

The inlet means may comprise a slot that extends across the treatment zone in a direction transverse to the direction of flow within the treatment zone. That enables the fluid to be introduced into the treatment zone in a relatively even flow. The outlet means may comprise a slot that extends across the treatment zone in a direction transverse to the direction of flow within the treatment zone.

The unit may comprise a recycle path along which liquid that has passed through the treatment zone may be recycled through at least part of the treatment zone. The outlet means may be provided with diversion means which can divert all or a part of the liquid flow into the recycle path. Recycling may be desirable where the contaminant level is high and/or where the contaminant concerned is difficult to eliminate.

The unit may further comprise a source of UV light which is arranged to irradiate fluid that passes through the unit. The UV source may be arranged to irradiate fluid that is downstream of the treatment zone. The UV source may be at or in the vicinity of the outlet means.

The first and second electrodes may be part of a bipolar arrangement or of a multipolar arrangement (the term "multipolar" including tripolar). In the case of bipolar or multipolar arrangements, it may be advantageous for there to be used bimetallic electrodes in order to provide improved control of the ions that enter the treatment stream, the use of monometallic electrodes sometimes giving rise to undesirably complex mixtures of ions in the treatment stream. One or more apertures may be provided for fluid communication through intervening electrodes in bipolar or multipolar arrangements. It may also be desirable to provide further apertures, preferably of smaller diameter than those provided for bulk fluid communication, those smaller apertures enabling turbulence to be increased as a result of liquid passing therethrough. Multipolar arrangements have been found to be suitable for drinking water purification. In the case of bipolar or multipolar arrangements, it may be desirable to apply an increased voltage, as compared with monopolar arrangements.

The arrangement may be such that an AC voltage or a pulsed DC voltage can be applied to the electrodes. Advantageously, the arrangement is such that a DC voltage can be applied. In that case, a time controller is provided for intermittently and temporarily reversing the polarity. A temporary and brief polarity reversal, for example, of only one or a few seconds' duration, may provide a means of cleaning the electrodes. For some waste stream treatment, however, polarity reversal may provide a means of introducing mixed polymeric cations. For example, it has been found that in one advantageous method of treating an oil-containing water stream, a unit having an iron electrode and an aluminium electrode may be operated in a first phase in which the aluminium electrode is the cathode and the iron electrode is the anode and, following polarity reversal, in a second phase in which the aluminium electrode is the anode and the iron electrode is the cathode. In the first phase, ferric ions enter the solution from the iron anode, hydrogen gas being generated at the aluminium cathode, and during that phase the oil and oil emulsions become destabilised. Following polarity reversal, aluminium ions enter the solution from the aluminium electrode, hydrogen being generated at the iron electrode, and during that second phase the effluent is clarified and the colloidal material removed by the polymeric solids formed from the metal ions. Using a repeated polarity reversal, for example, with a duration of each phase of 30 seconds before reversal, efficient oil removal is possible. By way of example, it was found that a waste stream containing 140 mg oil solids per litre had a reduced oil solids content of 2 mg/litre after treatment. Polarity reversal either for cleaning purposes or as an integral part of the treatment process can be controlled automatically, manually, or semi-automatically by setting pre-set polarity reversing times dependent on waste stream quality. The DC power source may be smooth, pulsed, or of variable frequency. Where an AC power source is used, that may have variable frequency selection.

The system advantageously comprises means for adding one or more chemical substances into a fluid to be treated. Advantageously, the or each monitoring means comprises a pH monitor.

The control means is preferably also arranged to control the addition of one or more chemicals in dependence on one or more characteristics monitored by the monitoring means. The system may further comprise a pump, which may be a fixed or variable speed pump, for pumping fluid into the unit. It will be appreciated that the pump must be capable of generating a flow through the unit that is of sufficient velocity that at least most of the floc particles and/or gas bubbles that may become attached to the electrodes during operation will be sheared from the electrode surfaces.

The invention further provides a method of treating a waste liquid stream, comprising causing the waste liquid stream to flow through a treatment zone defined between first and second opposed electrodes, the waste liquid flowing along at least a part of a surface of at least one of said first and second opposed electrodes and simultaneously applying a voltage across said first and second electrodes in order to generate an electrolytic current through the flowing liquid, wherein the voltage applied across the first and second electrodes is controlled in dependence on one or more monitored characteristics of the liquid, and separating waste from the liquid downstream of the treatment zone. Advantageously, the liquid is caused to flow along a flow path that is bounded on opposing sides by the opposed electrodes. In transverse section relative to the direction of flow the flow path may be of elongate rectangular configuration. It may be advantageous for the pathway to be convoluted to increase the residence time that the liquid flows through the treatment zone. Provision of a convoluted pathway, for example by insertion of a suitably shaped body of an insulating material, for example, a plastics material such as Tefnon (trade mark) or a ceramic material, between two electrodes may also advantageously increase the current density for a given unit under otherwise identical conditions. The area of cross section of the flow path may reduce in the direction of flow of the fluid.
Advantageously, however, the area of cross section of the flow path is substantially uniform along the direction of flow of the fluid. The separation between said first and second electrodes may be not more than 10mm. Advantageously, the separation between said first and second electrodes is not more than 5mm. Advantageously, the separation between said first and second electrodes is not less than 0.2mm.

The length of the flow path may be not less than 10mm, and advantageously, not less than 100mm. For reasons of compactness, it may be desirable for the length of the flow path to be not more than 2000mm.

The current density to which the fluid is subjected may be from 10 to 6000A/m², and is preferably more than 50 A/m², more preferably at least 500 A/m².

The turbulence of the fluid flow may be increased during passage of the fluid across the electrode faces. The spacing between the electrodes is advantageously so selected that the fluid treatment is substantially independent of gravity.

The addition of one or more chemical substances may be desirable in the case of certain fluids to be treated in order to change or maintain physical characteristics of the fluid such as pH, conductivity or oxidation state. Advantageously, one or more chemical substances, which may be selected from the group consisting of acids, carbon dioxide, alkali, hydrogen peroxide and soluble salts, is added to the fluid before or during its passage between the electrodes. Alkali may be added to neutralise an acidic fluid. Further, control of pH, for example by adding acid, may be necessary because electrolysis can result in an increase of alkalinity because hydrogen ions are removed as hydrogen gas from the liquid. Also, during the treatment of soluble oil waste solution using an aluminium electrode, destabilisation of the oil will only occur at pH 6.5 which represents the greatest insolubility of aluminium hydroxide. If the reaction is not pH corrected, the aluminium ion becomes soluble as a result of increasing alkalinity resulting in reduced treatment capability because of the lower concentration of the aluminium hydroxide required for destabilisation. Under such conditions the concentration of the cation (aluminium ion) can reach high concentrations in the treated effluent. This can be a disadvantage when the waste stream is being discharged to an environmentally sensitive area or may be required for re-use or re-cycling. The use of carbon dioxide is preferred as the buffering agent instead of an acid liquid solution. Carbon dioxide is advantageous in terms of its performance as a buffering agent, buffering at a pH of 6.5. Carbon dioxide may also be easier to store than an acidic liquid, and simpler apparatus may be used for its introduction, the use of a pump being unnecessary.

It will be appreciated that, although the process and apparatus of the invention enable decontamination to be achieved without the addition of flocculating and/or coagulating chemicals, the use of such chemicals is not excluded.

Preferably, hydrogen peroxide is added to the fluid before or during its passage between the electrodes. In mixed waste streams, anions such as chlorine and sulphates may be present and, upon electrical oxidation, these produce strong oxidising agents such as hydrogen peroxide, ozone, hypochlorite and chlorine which can be used to further attack pollutants. Hydrogen peroxide in the presence of ferrous ions or ferric salts when using iron electrodes, can generate the powerful hydroxyl radical ( OH) oxidising agent (Fenton Reaction), which may participate in oxidative destruction of various contaminants. The ferrous ion may be regenerated either photochemically (photo-Fenton reaction) by UV irradiation or further ferrous ions may be generated electrochemically from an iron electrode. Where it is not generated in the electrolysis process itself, it may be advantageous for hydrogen peroxide to be added to the fluid to be treated. Similarly, if an iron electrode is not being used it may be advantageous to add a ferric salt or ferrous salt (Fenton reagent). Advantageously a salt, for example sodium chloride or calcium chloride, may be added to the fluid before or during its passage between the electrodes. The addition of salt results in a reduction in the size of gas bubbles formed at the cathode. That increases efficiency because small bubbles produced at lower amperage have a larger surface area than larger coalescing bubbles produced at higher amperage. In addition the increased water conductivity will also result in lower power consumption.

The fluid is preferably irradiated with UV radiation. The UV radiation may be carried out during or after the fluid has been subjected to the electrolytic current.

The treatment method of the invention may be used for the treatment of any fluid, especially contaminated liquid streams such as contaminated water streams selected from waste-water, industrial effluents, process waters, groundwaters and leachates, rivers, streams, recreational waters, marinas and coastal waters. The method may be used, with appropriate selection of conditions in the treatment zone, to decontaminate fluids containing inorganics, organics, suspended and colloidal material, metals, organo-metallic compounds and other inorganic, organic and radioactive derivatives. In appropriate circumstances, bacteria and viruses may be destroyed or removed. The method of the invention provides, for example, an effective method of treating waste-water streams including cadmium and other metals used in electronics manufacturing, or in waste streams containing soaps and detergents or in waters containing pesticides, herbicides and other toxic materials.

Where UV irradiation is included, the treatment method is especially effective in the oxidative destruction of organic contaminants, for example, the dechlorination of PCBs or the breakdown of surfactants or long-chain organics into short-chain residues.

One form of treatment unit according to the invention and a treatment system including that unit will now be described by way of example with reference to the accompanying drawings in which:-
- Fig. 1: is a schematic view of a treatment system including the unit;
- Fig. 2: is a front view of the treatment unit, partly in section; and
- Fig. 3: is a section through x-x in Fig. 2.

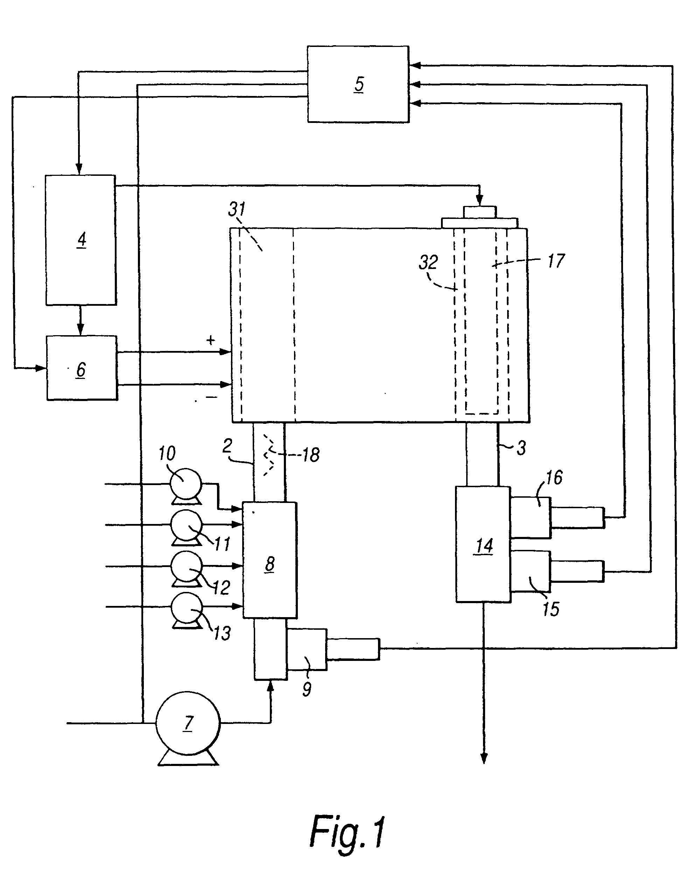

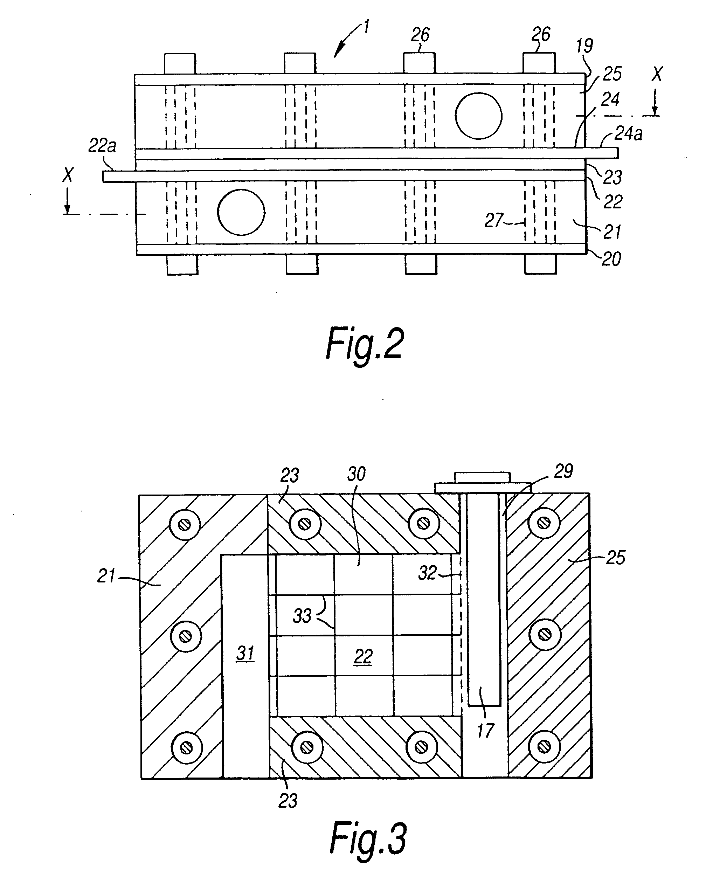

Referring to Fig. 1, an electroflocculation treatment system comprises as treatment unit an electrolytic cell 1 having an inlet conduit 2 and an outlet conduit 3. The electrolytic cell 1 will be described in more detail below with reference to Fig. 2. The system further comprises a power supply 4, a microprocessor control unit 5, time controller 6, a pump 7, which may be a variable or fixed delivery pump, and an inlet manifold 8. At the manifold 8 is provided an inlet chemical sensing means 9, an acid dosing pump or carbon dioxide supply 10, an alkali dosing pump 11, a dosing pump for conductivity solution 12, for example, for sodium chloride or calcium chloride, and a hydrogen peroxide dosing pump 13. At an outlet manifold 14 associated with outlet conduit 3 is an outlet chemical monitor 15 and a pH monitor 16. An Ultra Violet (UV) light source 17, which is provided in the cell in the vicinity of the outlet thereof, is also connected to the power supply 4. A static mixer 18 is provided in the inlet conduit 2. The power supply 4, time controller 6, pump 7, sensing means 9, dosing pumps 10, 11, 12 and 13, monitors 15 and 16 and UV source 17 are all connected to the control unit 5.

With reference to Fig. 2, the electrolytic cell 1 comprises a top manifold support plate 19 and a bottom manifold support plate 20 which embrace between them an influent delivery manifold plate 21, a steel plate 22 (cathode), a frame insulating plate 23, an aluminium plate 24 (anode) and an effluent delivery manifold plate 25. The plates 19, 20, 21, 22, 23, 24 and 25 are secured together by securing bolts 26, each of the said plates including suitably positioned apertures for that purpose. An insulating sheath 27 provides electrical isolation of the bolts from the plates. Whilst one form of attachment has been described, it will be appreciated that other forms of attachment are possible. For example, it may be preferred for the support plates 19 and 20 to be so dimensioned and configured that their edges extend beyond those of assembled plates 21, 22, 23, 24 and 25 such that only the top and bottom support plates 19 and 20 will be secured directly by the bolts and intermediary plates will be pressed together, and thereby secured, by those two plates. The influent delivery manifold plate 21 is provided with an inlet aperture at the front of the plate and on the left hand side in the view of Fig. 2. The effluent delivery manifold plate 25 is provided with an outlet aperture 28 at the front of the plate and on the right hand side in the view of Fig. 2. It will be appreciated that, if desired, the positions of the influent and effluent delivery manifold plates may be interchanged and that the position of the inlet and outlet apertures may similarly be changed or may each, independently, be on the top or bottom surface of the cell 1, provided that the liquid passes across the electrodes for treatment. Also, it may be advantageous for the inlet aperture and outlet aperture 28 to be on the same manifold plate. A return outlet 29 (not shown in Fig. 2) is provided in the back of the effluent delivery manifold plate 25 (but may also be positioned on the side, top or bottom, where appropriate or in the influent delivery manifold plate 21) through which treated or partially treated effluent can be passed for recycling to the inlet for further treatment within the cell 1. It may be preferable for diversion means to be provided in the outlet conduit 3.
Where provision is made for recycling, it will normally be preferable to provide adjustment means for reducing the effluent discharge, for example, a valve. For difficult waste streams, such adjustment means may be used to reduce effluent discharge and thus to assist in maintaining a high velocity of the stream across the electrodes. A recycle facility allows poorly conducting liquids, difficult liquids, liquids with high pollution loading or liquid requiring treatment with different polymeric cations (polarity reversal) to receive multiple passes to achieve the appropriate level of required treatment. In the case of polarity reversal, the time controller and/or the control unit will preferably be arranged to ensure that the recycled liquid experiences the correct phase of treatment in the cell. The recycle outlet may instead be located in the influent delivery manifold plate 21, at a position spaced from the inlet aperture. In Fig. 2 the anode 24 and cathode 22 are connected to the power supply via protruding edge portions 24a, 22a. It will be appreciated that the anode and cathode manifold plates may instead be flush with the support plates or recessed (for example, when only the support plates are secured as described above). Connection of the power supply under those circumstances may be, for example, via spring mounted connectors recessed into the respective manifold plates or via electrical connections mounted in the top and bottom of the contacting manifold plates via the top and bottom surfaces of the support plates. Whilst the cathode 22 is indicated above to be a steel plate and the anode to be an aluminium plate, the cathode and anode may be of any material suitable having regard to the liquid to be treated, selected from metal, metal coated or other conducting media. Selection of appropriate complementary electrode combinations may be based on waste stream characteristics and treatment requirement. For example, the steel cathode/iron anode combination is especially advantageous for oil removal because it provides effective destabilisation of the oil/water emulsion, steel cathode/aluminium anode for metal removal, and titanium dioxide and platinum electrodes for high oxidation of the liquid. The electrodes, although shown as solid plates, may instead be liquid or gaseous, being retained by suitable membranes, fibrous or reticulate materials. It may be advantageous to use chemically coated materials for the treatment of some waste streams.

In the case of bipolar and multipolar arrangements it would be advantageous to use bi-metallic electrodes, that is, with an electrode surface of one material and the opposite surface of another material to prevent mixed cationic polymeric coagulant being produced simultaneously. In the embodiment shown in Fig. 2, the anode and cathode thickness is of the order of 3mm. The electrodes may, however, be thicker or thinner, if desired. With some waste streams it may be advantageous to subject the stream to conditions that alter during passage of the liquid through the unit 1. This may be accomplished by using a wedge-shaped insulating plate with varying thickness along its length or width.

With reference to Fig. 3, the frame insulating plate 23 defines with the cathode 22 and anode 24 an electrolytic reaction cell 30 of substantially lamellar configuration,
The thickness of the insulating plate 23 has an effect on the conductive capacitance of the retained liquid. In the embodiment of Figs. 2 and 3, the plate 23 is of the order of 2mm thick. The thickness of the plate 23 is advantageously within the range of from 0.4mm to 5mm. In the embodiment shown, the reaction cell 30 has dimensions of 300mm x 500mm x 2mm. In such a reaction cell typical volumes of treatment flow may be 1000 litres/hour. The reaction cell may be varied in size to cater for appropriate volumes of liquid to be treated. The influent delivery manifold plate 21 and cathode 22 are provided with a slot 31 cut at right angles to the direction of flow across the reaction cell 30, the slot communicating between the inlet aperture and the reaction cell 30. A similar slot 32 is provided in the anode 24 and effluent manifold plate 25, the slot 32 communicating between the downstream end of reaction cell 30 and the outlet aperture 28. The slot 31 provides for flow of the liquid at even pressure into the reaction cell 30. A plurality of filaments 33, for example of a plastics material such as nylon, are attached to two opposed sides of frame plate 23 such that they extend across the reaction cell 30. The filaments may, if desired, be in the form of a mesh. Instead, the desired disruption of the liquid flow may be obtained by the use of plastic strands or other nonconducting media that are secured to the frame 23 or to another component of the unit in such a manner that they extend into reaction cell 30. In use, liquid flows through the reaction cell 30, flowing across the surfaces of the electrodes. In general, for a 300mm x 500mm x 2mm reaction cell a DC voltage of from 15 to 25 volts and a current of from 5 to 10 amps are maintained across the electrodes. At the downstream end of the reaction cell, liquid exits via outlet slot 32. The UV light source 17 (which may be any suitable source operative in the wavelength range of 180 to 300nm) is so secured into the effluent delivery manifold plate 25 (in the embodiment shown, through the recycle outlet 29) that the discharge from the reaction cell 30 passes over the light source. The UV light source affords both biological disinfection and organic breakdown by the photocatalysis of hydrogen peroxide, produced either by oxidation of sulphates present in the waste stream or by the addition of hydrogen peroxide via dosing pump 13 in the presence of ferrous ions (for example, when the anode 7 is iron).

In the drawings, the cell has been drawn as rectangular but may be square, cylindrical or any other shape, provided that the electrodes are spaced from one another and liquid can enter and leave the reaction cell between the electrodes.

In the embodiment of Figs. 2 and 3, the anode and cathode have two letter box slots 31 and 32 to allow the entry and exit, respectively, of liquid between the electrodes. That arrangement enables the surface area of the electrodes exposed to the liquid (and in consequence the area for electrode-electro active species mixing interaction) to be relatively high, and facilitates an even pressure gradient across the reaction cell 30. It may be desirable, for example in the case of multipolar arrangements, for the electrodes to have an array of through apertures to help promote turbulence. The filaments 33 (or the mesh, strands or the like) further disrupt even flow and enhance turbulence and mixing when liquid is passed through the reaction cell 30.

In use, waste-water is pumped by pump 7 past a flowmeter (not shown) and chemical sensing means 9. The chemical sensing means is arranged to monitor pH and optionally other chemical characteristics of the fluid. In full automation the wastewater characteristics are determined by the sensing means 9 and may include pH, electrical conductivity, oxidation reduction potential, suspended solids, colour, total or chemical oxygen demand or other determinands as may be required, for example, heavy metal content. The information is used by the control unit 5 to determine appropriate settings of the voltage for power supply 4, and of any chemical additions, if required, to be added via the dosing pumps 10, 11, 12 and 13. The correct treatment regime may, for example, be determined by reference to stored mathematical-chemical models, algorithms and/or systems and flow information from design trials and the determination of the treatment regime may involve the use of neural networks. Prior to entering the cell 1 the liquid is mixed in static mixer 18. Where, instead, the system is operated in manual or semi-automatic mode, the voltage and dose rates may be manually selected. In practice and depending upon the nature of the waste stream and desired treatment complexity, one or more of the dosing pumps 10, 11, 12 and 13 may be omitted and, if desired, chemical addition(s) may be carried out upstream or downstream of the cell as pre-treatment or posttreatment step(s). In the outlet conduit, the pH probe 16 is used to monitor pH and the chemical probe 15 is used to monitor other chemical characteristics of the effluent stream, and the measured pH of the effluent stream may be taken account of by control unit 5 in determining the treatment conditions within the cell 1.

During operation the pump flow rate is selected to maintain the highest amperage for a given liquid and DC. voltage and having regard to the optimum degree of treatment required. This may be done manually or automatically as described above. During normal operation it is preferred to continually apply a voltage across the electrodes, with continuous flow of liquid through reaction cell 30. Whilst the treatment unit 1 is suitable for use in the treatment of a continuous flow of liquid, it will be appreciated that the unit could also be used in batch mode in which a predetermined volume of liquid is pumped into the cell, a voltage is applied across the electrodes to treat the liquid, the voltage switched off and the pump started to flush the treated liquid from the cell and to introduce the next aliquot of liquid for treatment.

In the embodiment described above, the UV treatment process is integral with the electrolytic treatment, for example, electroflocculation process, and relies on hydrogen peroxide generated from electrolysis, or on external addition of hydrogen peroxide with ferrous ions produced electrolytically by the oxidation of an iron electrode. For high bulk or oil waste streams it may be desirable, for increased effectiveness of the treatment process, for solid material to be removed prior to the UV treatment. That may be achieved by solid-liquid separation or fractionation prior to the UV treatment. In those circumstances, it may be preferred for the UV source to be provided downstream of the treatment unit 1.

In the case of other liquids, for example, waste streams from the cleaning of metal articles, which may contain soaps and detergents with metal ions, it may be preferable to break down the soaps and detergent by means of UV irradiation (following introduction of ferrous ions and hydrogen peroxide and by means of the Fenton reaction) before treatment in the unit to remove metal ions. The UV source may then advantageously be upstream of the unit 1.

In the embodiment described above and shown in the drawings, only one electrolytic cell has been described, which may be monopolar, bipolar or multipolar. It may be advantageous, for large volume waste streams, to include a number of cells in the treatment system. In that case, the individual cells may be mounted onto a frame support with common inlet and outlet manifolds. Such a system could consist of cells in series or parallel arrangement, depending upon waste stream characteristics and degree of treatment required. For mixed waste streams it may also be advantageous to include cells having different electrode arrangements and/or different electrode materials and combinations. For high volume throughput it may also be advantageous to carry out a pre-treatment before the liquid is introduced into the unit and/or to carry out UV irradiation downstream of the unit rather than within the unit.

The following Example illustrates the invention:

### EXAMPLE

A liquid waste stream consisting of water contaminated with soluble heavy metals, aviation fuel and detergent was pumped at a rate of 1000 litres/hour through a unit according to Figs.2 and 3 using an aluminium anode and a steel cathode. No chemical additives were introduced to the stream before treatment. A voltage of 25V was maintained across the electrodes. The current was 10A (corresponding to a current density of about 67A/m²). The stream was not recycled. Electroflocculation occurred in the cell and the heavy metals were converted to an insoluble floc, which was carried with the effluent out of the cell. The insoluble material was removed by a vertical belt skimmer in a tank located downstream of the unit to which the effluent from the unit was delivered. The heavy metal content of the waste stream was determined before and after treatment, and Table 1 indicates the results obtained.

**Table 1**

| **Metal (µg/l)** | **Before** | **After** | **%** |
|---|---|---|---|
| Lead | 165 | 2.43 | 98.5 |
| Cadmium | 248 | 6.86 | 97.2 |
| Copper | 229 | 51 | 77.7 |
| Zinc | 231 | 10.3 | 95.5 |
| Chromium | 2100 | 592 | 71.8 |
| Iron | 456 | 23 | 95.0 |
| Nickel | 6.24 | <3 | - |

Table 2 indicates decontamination results obtained in a variety of applications using a unit according to Figs. 2 and 3.

**Table 2**

| **Treatment** | **% Removal** |
|---|---|
| BOD (1) reduction | 92% |
| COD (2) reduction | 96% |
| TSS (3) removal | 94% |
| Ammonia removal | 59% |
| Zinc removal | 99% |
| Cadmium removal | 96% |
| Lead removal | 99% |
| Chromium removal | 96% |
| Nickel removal | 99% |
| Iron removal | 99% |
| Total Oil & Grease reduction | 99% |
| Copper removal | 99% |
| Aluminium removal | 97% |
| PCB removal | 98% |

| | |
|---|---|
| (1) Biochemical oxygen demand | |
| (2) Chemical oxygen demand | |
| (3) Total suspended solids | |

It will be appreciated that the optimum conditions for removal of one contaminant may differ from the optimum conditions for removal of another so that, in the treatment of waste streams containing a number of contaminants, it may not be possible to achieve optimum removal of all contaminants during one treatment.

### Example 2

A liquid waste stream consisting of water contaminated with brewery waste and peracetic acid was pumped at a flow rate of 1000 litres/hour through a unit which was in accordance with Figs. 2 and 3 except that the UV source was omitted. A voltage of 15V/10A was maintained across an iron-steel electrode combination spaced 2mm apart. Production of floating solids and a ferrous iron rich effluent (green) was observed, indicating the occurrence of electroflocculation. The effluent was injected with hydrogen peroxide at a rate of 2 litres/hour. Oxidation was monitored by observation of the conversion of ferrous ions (indicated by a green coloured solution) to ferric ions (brown coloured solution) - indicating the Fenton reaction. Under UV light treatment, the ferric ions were converted back to ferrous ions (Photo Fenton reaction). Both reactions were accompanied by gas evolution which eventually stopped after about 2 minutes. The organic content of the stream was determined as Chemical Oxygen Demand (COD) before treatment, after electroflocculation and after oxidation treatment as indicated below:

| Determinand | Before treatment | After electroflocculation | After oxidation |
|---|---|---|---|
| COD mg/l | 5330 | 2980 (44.1%) | 230 (95.7%) |
| % indicates the percentage reduction of organics as measured by COD following respective treatments. | | | |

### Example 3

A liquid waste stream consisting of oil condensate and water from an air compressor operation was pumped through a unit according to Figs. 2 and 3 at a flow rate of 1000 litres/hour using an aluminium-iron electrode combination spaced 2mm apart. Liquid was pumped from a 200 litre container through the same unit on a recycle loop. A two-stage treatment was applied which consisted of 15 minutes electrolysis with an iron electrode as anode followed by 15 minutes with the aluminium electrode as anode. Electroflocculation was indicated by the production of precipitated oil (destabilised) and suspended material in the storage container. All suspended material was removed by a vertical belt skimmer. During the first stage of treatment, all traces of oil/oil emulsion appeared to have been removed, but the sample remained turbid with visible ferric oxide present (orange-brown colour). Following the second stage of treatment, the occurrence of electroflocculation was indicated by the formation of floating brown-orange scum which was subsequently removed by a skimmer. The resultant effluent was clear. The oil and solids content of the waste stream were determined before and after treatment as indicated below:

| Determinand | Before | After | % |
|---|---|---|---|
| Oil & grease mg/l | 128 | 2 | 98.4 |
| TSS mg/l | 142 | 2 | 98.6 |

## Claims

1. A fluid treatment system including a fluid-treatment unit comprising first and second electrodes spaced from one another and defining between them a treatment zone, the unit having inlet means for introduction of fluid into the said treatment zone and outlet means for exit of fluid from the said treatment zone, the treatment zone providing a flow path along which the fluid entering through the inlet means in use flows towards the outlet means, the flow path extending generally along at least a part of a surface of at least one of the electrodes, monitoring means for monitoring one or more characteristics of the fluid upstream and/or downstream of the treatment unit, the system further comprising a power source for applying a voltage to the electrodes, means for adjusting the voltage applied to the electrodes, and a control means, the control means being arranged to control the applied voltage in dependence on one or more monitored characteristics of the fluid.

2. A fluid treatment system according to claim 1, comprising means for adding one or more chemical substances into a fluid to be treated.

3. A fluid treatment system according to claim 1 or claim 2, in which the or each monitoring means comprises a pH monitor.

4. A fluid treatment system according to anyone of claims 2 to 3, in which the power source is an AC or pulsed DC power source of which the frequency is adjustable.

5. A fluid treatment system according to any of claims 1 to 4, in which the control means is also arranged to control the addition of one or more chemicals in dependence on one or more characteristics monitored by the monitoring means.

6. A fluid treatment system according to any of claims 1 to 5, in which the treatment zone comprises means for increasing the turbulence within fluid flowing through the zone.

7. A fluid treatment system according to any one of claims 1 to 6, which comprises a recycle path along which fluid that has passed through the treatment zone may be recycled through at least part of the treatment zone.

8. A fluid treatment system according to anyone of claims 1 to 7, in which said first and second electrodes are part of a bipolar arrangement.

9. A fluid treatment system according to any one of claims 1 to 8, in which said first and second electrodes are part of a multipolar arrangement.

10. A fluid treatment system according to claim 8 or claim 9, in which at least one further electrode in said bipolar or multipolar arrangement is a bimetallic electrode.

11. A method of treating a waste liquid stream, comprising causing the waste liquid stream to flow through a treatment zone defined between first and second opposed electrodes, the waste liquid flowing along at least a part of a surface of at least one of said first and second opposed electrodes and simultaneously applying a voltage across said first and second electrodes in order to generate an electrolytic current through the flowing liquid, wherein the voltage applied across the first and second electrodes is controlled in dependence on one or more monitored characteristics of the liquid, and separating waste from the liquid downstream of the treatment zone.

12. A method according to claim 11, in which in transverse section relative to the direction of flow, the flow path is of elongate rectangular configuration.

13. A method according to claim 11 or claim 12, in which the separation between the first and second electrodes is not more than 10mm.

14. A method according to claim 13, in which the separation between said first and second electrodes is not more than 5mm.

15. A method according to any one of claims 11 to 14, in which the turbulence of the liquid flow is increased during passage of the liquid across the electrode faces.

16. A method according to any one of claims 11 to 15, in which one or more chemical substances are added to the liquid before or during its passage between the electrodes.

17. A method according to any one of claims 11 to 16, in which at least one chemical substance selected from the group consisting of acids, carbon dioxide, alkali, hydrogen peroxide and salts is added to the liquid before or during its passage between the electrodes.

18. A method according to any one of claims 11 to 17, in which the conditions are such that hydrogen peroxide is generated in the liquid.

19. A method according to any one of claims 11 to 18, in which the conditions are such that ferrous ions are generated in the liquid.

20. A method according to any one of claims 11 to 19, in which said first and second electrodes are of different materials and the polarity of said first and second electrodes is reversed.

21. A method according to any one of claims 11 to 20, wherein the liquid is subjected to treatment conditions determined by reference to mathematical-chemical models or algorithms.

## Patentansprüche

1. Fluidbehandlungssystem mit einer Fluidbehandlungseinheit aufweisend erste und zweite Elektroden, die beabstandet voneinander angeordnet sind und zwischen sich eine Behandlungszone definieren, wobei die Einheit Einlassmittel für die Zuführung des Fluids in die Behandlungszone und Auslassmittel zum Ablass des Fluids aus der Auslasszone aufweist, die Behandlungszone einen Flussweg aufweist, entlang dem das durch das Einlassmittel zulaufende Fluid beim Betrieb zum Auslassmittel fließt, der Flussweg sich im Allgemeinen entlang mindestens eines Teils der Oberfläche mindestens einer der Elektroden erstreckt, Überwachungsmittel zum Überwachen einer oder mehrerer Eigenschaften des Fluids stromauf und/oder stromab der Behandlungseinheit, wobei das System weiterhin eine Stromquelle zum Anlegen einer Spannung an die Elektroden aufweist, Mittel zur Einstellung der Spannung, die an die Elektroden angelegt ist, und ein Steuerungsmittel, wobei das Steuerungsmittel zur Steuerung der angelegten Spannung in Abhängigkeit von einer oder mehrerer überwachten Eigenschaften des Fluids ausgelegt ist.

2. Fluidbehandlungssystem nach Anspruch 1, aufweisend Mittel zur Zuführung von einer oder mehrerer chemischer Substanzen zu einem zu behandelnden Fluid.

3. Fluidbehandlungssystem nach Anspruch 1 oder Anspruch 2, bei dem das oder jedes Überwachungsmittel einen pH-Monitor aufweist.

4. Fluidbehandlungssystem nach einem der Ansprüche 2 oder 3, bei dem die Stromquelle eine Wechselstrom- oder gepulste Gleichstromquelle ist, deren Frequenz einstellbar ist.

5. Fluidbehandlungssystem nach einem der Ansprüche 1bis 4, bei dem das Steuerungsmittel so ausgelegt ist, dass die Zugabe eines oder mehrerer Chemikalien in Abhängigkeit von einer oder mehrerer Eigenschaften gesteuert wird, die von dem Überwachungsmittel überwacht werden.

6. Fluidbehandlungssysteme nach einem der Ansprüche 1 bis 5, bei dem die Behandlungszone Mittel zur Erhöhung der Turbulenz innerhalb des Fluids aufweist, das durch die Zone fliesst.

7. Fluidbehandlungssystem nach einem der Ansprüche 1 bis 6, das einen Rückführungsweg aufweist, entlang dem Fluid, das durch die Behandlungszone geführt wurde, durch mindestens einen Teil der Behandlungszone zurückgeführt werden kann.

8. Fluidbehandlungssystem nach einem der Ansprüche 1 bis 7, bei dem die ersten und zweiten Elektroden Teil einer bipolaren Anordnung sind.

9. Fluidbehandlungssystem nach einem der Ansprüche 1 bis 8, bei dem die ersten und zweiten Elektroden Teil einer multipolaren Anordnung sind.

10. Fluidbehandlungssystem nach Anspruch 8 oder 9, bei dem mindestens eine weitere Elektrode in der bipolaren oder multipolaren Anordnung eine Bimetallelektrode ist.

11. Verfahren zur Behandlung eines flüssigen Abwasserstroms, bei dem man den flüssigen Abwasserstrom durch eine Behandlungszone fließen lässt, die zwischen ersten und zweiten gegenüber liegenden Elektroden definiert wird, das Abwasser entlang zumindest eines Teils einer Oberfläche mindestens einer der ersten und zweiten gegenüber liegenden Elektroden fließt und gleichzeitig Spannung an die ersten und zweiten Elektroden anlegt wird, um einen elektrolytischen Strom durch die fließende Flüssigkeit zu generieren, wobei die an die erste und zweite Elektrode angelegte Spannung in Abhängigkeit von einer oder mehrerer überwachten Eigenschaften der Flüssigkeit gesteuert wird, und dem Abfall aus der Flüssigkeit stromab der Behandlungszone abtrennt wird.

12. Verfahren nach Anspruch 11, bei dem im Querbereich relativ zur Fließrichtung der Flussweg von einer länglichen rechteckigen Konfiguration ist.

13. Verfahren nach Anspruch 11 oder 12, bei dem die Abtrennung zwischen den ersten und zweiten Elektroden nicht mehr als 10 mm beträgt.

14. Verfahren nach Anspruch 13, bei dem die Abtrennung zwischen den ersten und zweiten Elektroden nicht mehr als 5 mm beträgt.

15. Verfahren nach einem der Ansprüche 11 bis 14, bei dem die Turbulenz der Flüssigkeit während der Passage der Flüssigkeit entlang der Elektrodenoberflächen erhöht wird.

16. Verfahren nach einem der Ansprüche 11 bis 15, bei dem eine oder mehrere chemische Substanzen zur Flüssigkeit vor oder während der Passage zwischen den Elektroden zugeführt werden.

17. Verfahren nach einem der Ansprüche 11 bis 16, bei dem mindestens eine chemische Substanz, die aus der Gruppe ausgewählt ist, die aus Säuren, Kohlendioxid, Alkali, Wasserstoffperoxid und Salzen besteht, zu der Flüssigkeit vor oder während ihrer Passage zwischen den Elektroden zugeführt wird.

18. Verfahren nach einem der Ansprüche 11 bis 17, bei dem die Bedingungen derart sind, dass Wasserstoffperoxid in der Flüssigkeit erzeugt wird.

19. Verfahren nach einem der Ansprüche 11 bis 18, bei dem die Bedingungen derart sind, dass Eisen-II-Ionen in der Flüssigkeit erzeugt werden.

20. Verfahren nach einem der Ansprüche 11 bis 19, bei denen die ersten und zweiten Elektroden aus unterschiedlichen Materialien sind und die Polarität zwischen den ersten und zweiten Elektroden umgekehrt wird.

21. Verfahren nach einem der Ansprüche 11 bis 20, bei dem die Flüssigkeit Behandlungsbedingungen unterzogen wird, die bezüglich mathematischchemischer Modelle oder Algorithmen bestimmt sind.

## Revendications

1. Système de traitement de fluide comportant une unité de traitement de fluide comprenant des première et seconde électrodes espacées l'une de l'autre et définissant entre elles une zone de traitement, l'unité comportant un moyen d'entrée destiné à l'introduction de fluide dans ladite zone de traitement et un moyen de sortie destiné à la sortie du fluide de ladite zone de traitement, la zone de traitement fournissant un trajet de circulation le long duquel le fluide entrant par le moyen d'entrée circule, en utilisation, vers le moyen de sortie, le trajet de circulation s'étendant globalement le long d'au moins une partie d'une surface d'au moins l'une des électrodes, un moyen de surveillance destiné à surveiller une ou plusieurs caractéristiques du fluide en amont et/ou en aval de l'unité de traitement, le système comprenant en outre une source d'alimentation destinée à appliquer une tension aux électrodes, un moyen de réglage de la tension appliquée aux électrodes, et un moyen de commande, le moyen de commande étant agencé pour commander la tension appliquée en fonction d'une ou plusieurs caractéristiques surveillées du fluide.

2. Système de traitement de fluide selon la revendication 1, comprenant un moyen destiné à ajouter une ou plusieurs substances chimiques dans un fluide à traiter.

3. Système de traitement de fluide selon la revendication 1 ou la revendication 2, dans lequel le ou chaque moyen de surveillance comprend un instrument de surveillance du pH.

4. Système de traitement de fluide selon l'une quelconque des revendications 2 et 3, dans lequel la source d'alimentation est une source d'alimentation en courant alternatif ou en courant continu pulsé dont la fréquence est réglable.

5. Système de traitement de fluide selon l'une quelconque des revendications 1 à 4, dans lequel le moyen de commande est également agencé pour commander l'ajout d'un ou plusieurs produits chimiques selon une ou plusieurs caractéristiques surveillées par le moyen de surveillance.

6. Système de traitement de fluide selon l'une quelconque des revendications 1 à 5, dans lequel la zone de traitement comprend un moyen destiné à augmenter la turbulence à l'intérieur du fluide s'écoulant au travers de la zone.

7. Système de traitement de fluide selon l'une quelconque des revendications 1 à 6, comprenant un trajet de recyclage le long duquel un fluide qui a traversé la zone de traitement peut être recyclé au travers d'au moins une partie de la zone de traitement.

8. Système de traitement de fluide selon l'une quelconque des revendications 1 à 7, dans lequel lesdites première et seconde électrodes font partie d'un agencement bipolaire.

9. Système de traitement de fluide selon l'une quelconque des revendications 1 à 8, dans lequel lesdites première et seconde électrodes font partie d'un agencement multipolaire.

10. Système de traitement de fluide selon la revendication 8 ou la revendication 9, dans lequel au moins une autre électrode dudit agencement bipolaire ou multipolaire est une électrode bimétallique.

11. Procédé de traitement d'un flux de déchets liquides, comprenant le fait d'amener le flux de déchets liquides à s'écouler au travers d'une zone de traitement définie entre des première et seconde électrodes opposées, les déchets liquides s'écoulant le long d'au moins une partie d'une surface d'au moins une électrode parmi lesdites première et seconde électrode opposées, et l'application simultanée d'une tension entre lesdites première et seconde électrodes de manière à engendrer un courant électrolytique au travers du liquide qui s'écoule, dans lequel la tension appliquée entre les première et seconde électrodes est commandée en fonction d'une ou plusieurs caractéristiques surveillées de liquide, et la séparation des déchets du liquide en aval de la zone de traitement.

12. Procédé selon la revendication 11, dans lequel, dans une section transversale par rapport à la direction de l'écoulement, le trajet de circulation présente une configuration rectangulaire allongée.

13. Procédé selon la revendication 11 ou la revendication 12, dans lequel la séparation entre les première et seconde électrodes n'excède pas 10 mm.

14. Procédé selon la revendication 13, dans lequel la séparation entre lesdites première et seconde électrodes n'excède pas 5 mm.

15. Procédé selon l'une des revendications 11 à 14, dans lequel la turbulence de l'écoulement liquide est augmentée au cours du passage du liquide devant les faces des électrodes.

16. Procédé selon l'une quelconque des revendications 11 à 15, dans lequel une ou plusieurs substances chimiques sont ajoutées au liquide avant ou au cours de son passage entre les électrodes.

17. Procédé selon l'une quelconque des revendications 11 à 16, dans lequel au moins une substance chimique sélectionnée parmi le groupe constitué d'acides, de dioxyde de carbone, d'alcalis, de peroxyde d'hydrogène et de sels est ajoutée au liquide avant ou au cours de son passage entre les électrodes.

18. Procédé selon l'une quelconque des revendications 11 à 17, dans lequel les conditions sont telles que du peroxyde d'hydrogène est généré dans le liquide.

19. Procédé selon l'une quelconque des revendications 11 à 18, dans lequel les conditions sont telles que des ions ferreux sont générés dans le liquide.

20. Procédé selon l'une quelconque des revendications 11 à 19, dans lequel lesdites première et seconde électrodes sont en matériaux différents et la polarité desdites première et seconde électrodes est inversée.

21. Procédé selon l'une quelconque des revendications 11 à 20, dans lequel le liquide est soumis à des conditions de traitement déterminées en faisant référence à des modèles ou à des algorithmes mathématico-chimiques.
